# FASCICULE DE BREVET EUROPEEN

(11) **EP 2 512 923 B1**
(45) Date de publication et mention de la délivrance du brevet: **29.08.2018**
(21) Numéro de dépôt: 10808995.4
(22) Date de dépôt: 15.12.2010
(51) Int. Cl.: B64D 11/00, B65G 1/04

(54) **DISPOSITIF POUR LE RANGEMENT OPTIMISÉ DE CHARIOTS**
VORRICHTUNG FÜR OPTIMALE WAGENVERSTAUUNG
DEVICE FOR OPTIMUM CART STOWAGE

(30) Priorité: 17.12.2009 FR 0906129
(43) Date de publication de la demande: 24.10.2012
(73) Titulaire: Airbus, 31700 Blagnac (FR)
(72) Inventeur: SAINT-JALMES, Bruno, F-31400 Toulouse (FR); RUMEAU, Bernard, F-31530 Levignac-sur-Save (FR); ZANEBONI, Jason, F-31700 Blagnac (FR)
(74) Mandataire: Santarelli
(86) Numéro de dépôt international: PCT/FR2010/000838
(87) Numéro de publication internationale: WO 2011/080414

(56) Documents cités:
- EP-A1- 0 443 897
- EP-A2- 1 174 340
- WO-A1-2008/070835
- US-A1- 2005 133 308
- US-A1- 2006 186 268

## Description

La présente invention concerne un dispositif optimisé pour le rangement de chariots.

Dans un aéronef, des chariots sont utilisés notamment pour le service et le stockage des repas. Généralement, des repas sont préparés dans des locaux techniques appelés cuisines ou galleys et sont ensuite disposés dans des chariots pour être servis aux passagers. Toutefois, des chariots peuvent également être utilisés à d'autres fins : ils peuvent par exemple contenir tous types d'objets, tels des vêtements, des vêtements sur cintres, des journaux, de la vaisselle, du matériel technique, médical, ....

Bien que plus particulièrement destinée à une utilisation dans un aéronef, la présente invention ne se limite pas aux aéronefs mais concerne de manière plus générale tous les moyens de transport destinés à accueillir un grand nombre de passagers.

Dans un aéronef, les chariots, appelés également trolleys, sont généralement rangés dans des compartiments lorsqu'ils ne sont pas utilisés pour le service. Le plancher de ces compartiments affleure avec le plancher de la cabine dans laquelle ils se trouvent. L'espace au-dessus du compartiment est généralement aménagé comme plan de travail ou reçoit des équipements tels des fours, des machines à café, boîtes de rangement, etc..

De cette manière, le personnel naviguant commercial à bord de l'aéronef dispose de chariots directement à proximité de l'endroit où sont préparés et réchauffés les repas à distribuer. Toutefois, tous les chariots étant rangés sur un même plan, au niveau du plancher de la cabine correspondante, une surface importante de cette cabine doit être dédiée au rangement desdits chariots. L'occupation de cette surface se fait au détriment de la surface disponible pour aménager des sièges et accueillir des passagers.

Pour limiter la surface d'une cabine recevant des passagers, il a déjà été proposé d'aménager une partie de la soute de l'aéronef pour y loger des chariots.

Ainsi par exemple, le document FR-2 658 488 révèle un système pour l'approvisionnement d'une cabine d'aéronef en chariots. Le système révélé comprend un conteneur de stockage dans lequel sont agencés des chariots et qui est situé dans la soute de l'aéronef. Un automate commandable est prévu dans la soute et peut se déplacer dans celle-ci pour saisir dans ledit conteneur chacun des chariots qui y sont agencés pour les amener ensuite dans la cabine de l'aéronef par l'intermédiaire d'un passage aménagé entre la soute et la cabine. Une unité de commande programmable est reliée à l'automate commandable et contient des informations relatives à la position des chariots dans le conteneur et au type de produits contenus dans chacun desdits chariots. De la sorte, en fonction des informations transmises par l'unité de commande programmable, l'automate se déplace pour saisir le chariot correspondant et l'amener de la soute à la cabine de l'aéronef.

Une telle solution permet un gain de place au niveau de la cabine de l'aéronef et permet donc ainsi de prévoir un plus grand nombre de passagers pour une surface donnée. Toutefois, pour réaliser le passage des chariots entre la soute et la cabine, il est nécessaire de prévoir au moins un passage dans le plancher de la cabine. Ceci nécessite un aménagement de la structure de l'aéronef et impose de prévoir notamment des renforts au niveau du passage réalisé. L'espace en soute qui accueille les chariots doit également être pressurisé et climatisé. On remarque également que cette solution limite le volume de la soute influant alors négativement sur les capacités de l'aéronef à emporter du fret. Il convient également de placer judicieusement les cuisines dans la cabine de l'aéronef de telle sorte que les chariots dans la soute se trouvent à proximité des cuisines sans toutefois gêner l'aménagement de la zone de fret restante pour accueillir le reste du fret destiné à prendre place dans l'aéronef.

On connaît également US 2006/018628, qui décrit un dispositif pour le rangement d'un chariot dans un aéronef, ce dispositif comprenant :
- une unité de transport comportant une cage ;
- un premier système motorisé de transfert fixé à une paroi latérale de ladite cage, pour le déplacement du chariot au sein de la cage ;
- un ascenseur ou monte-charge permettant de monter et descendre verticalement l'unité de transport entre le pont de la cabine et un niveau supérieur ;
- des rails permettant de translater transversalement l'unité de transport entre le monte-charge et une position située en regard longitudinalement d'un emplacement dans un compartiment de stockage supérieur ;
- un deuxième système motorisé de transfert fixé à la paroi supérieure du compartiment de stockage, pour le déplacement dudit chariot au sein du compartiment de stockage.

Le monte-charge décrit occupe une place importante qui pourrait être utilisée pour le stockage d'autres chariots ou pour améliorer le confort des passagers. En outre, l'unité de transport et les divers moyens de translation et de transfert prévus en plus du monte-charge, augmentent la masse de l'aéronef.

La présente invention a alors pour but de fournir des moyens permettant de réduire la surface au sol nécessaire dans une cabine pour le rangement des chariots sans toutefois impacter la structure de l'aéronef, ni limiter le volume disponible dans la soute et destiné notamment à recevoir du fret.

À cet effet, elle propose un dispositif pour le rangement de chariots dans un espace comprenant un plancher, ledit dispositif comportant un premier compartiment adapté à recevoir au moins un chariot ainsi qu'un second compartiment adapté à recevoir au moins un chariot et présentant une ouverture permettant l'entrée et la sortie de chariots.

Selon la présente invention, le second compartiment est disposé au-dessus du premier compartiment, et le dispositif comporte en outre :
- un deuxième système motorisé de transfert fixé à la paroi supérieure du compartiment de stockage, pour le déplacement dudit chariot au sein du compartiment de stockage.

Le monte-charge décrit occupe une place importante qui pourrait être utilisée pour le stockage d'autres chariots ou pour améliorer le confort des passagers. En outre, l'unité de transport et les divers moyens de translation et de transfert prévus en plus du monte-charge, augmentent la masse de l'aéronef.

US20050133308 divulgue un dispositif pour le rangement de chariots, illustré aux figures 4 et 5, comprenant une plateforme de stockage circulaire supérieure sur laquelle les chariots sont rangés en étoile, de sorte que la direction longitudinale de chaque chariot ainsi rangé suit un rayon du cercle. Les chariots sont transportés jusqu'à la plateforme circulaire supérieure à l'aide d'un monte-charge central muni d'un plateau tournant permettant de faire pivoter le chariot de façon à aligner sa direction longitudinale sur le rayon correspondant. Cet aménagement proposé par US20050133308 est contraire à toute tentative d'optimisation de l'espace disponible dans l'aéronef.

US20050133308 divulgue un autre dispositif, illustré aux figures 6 à 17, comprenant un compartiment supérieur parallélépipédique à ouverture latérale et un monte-charge latéral. Les chariots sont rangés dans le compartiment supérieur en étant alignés selon une direction d'alignement. Ils introduits ou sortis du compartiment supérieur suivant cette même direction d'alignement, selon la règle du « first-in last-out », ce qui complique la gestion des chariots et le travail du personnel navigant. En outre, le monte-charge latéral occupe, au niveau du plancher, la place d'un compartiment de stockage d'un chariot.

La présente invention a alors pour but de fournir des moyens permettant de réduire la surface au sol nécessaire dans une cabine pour le rangement des chariots sans toutefois impacter la structure de l'aéronef, ni limiter le volume disponible dans la soute et destiné notamment à recevoir du fret.

À cet effet, elle propose un dispositif selon la revendication 1 pour le rangement de chariots dans un espace comprenant un plancher, ledit dispositif comportant un premier compartiment adapté à recevoir au moins un chariot ainsi qu'un second compartiment adapté à recevoir au moins un chariot et présentant une ouverture permettant l'entrée et la sortie de chariots.

Selon la présente invention, le second compartiment est disposé au-dessus du premier compartiment, et le dispositif comporte en outre : se loger dans un évidement de taille adaptée pour que ledit plateau présente une face supérieure affleurant avec le plancher.

Selon une caractéristique possible, le plateau présente une largeur sensiblement égale à celle de l'ouverture du second compartiment.

Dans une première forme de réalisation, il est proposé que les moyens de transfert comportent un tiroir présentant une face inférieure horizontale et au moins une paroi latérale verticale. Un tel tiroir peut contenir de préférence plusieurs chariots. De la sorte, la manipulation d'un seul tiroir permet d'agir sur plusieurs chariots. Comme généralement on ne se sert pas d'un seul chariot à la fois, il est préférable de limiter les manipulations et il est donc avantageux de déplacer plusieurs chariots dans une même opération. La face inférieure horizontale est prévue pour recevoir un ou plusieurs chariots. Les parois latérales verticales sont quant à elles prévues notamment pour sécuriser les chariots et éviter leur chute lors d'une manipulation. Ainsi, bien entendu, on ne sortirait pas du cadre de l'invention si d'autres moyens étaient envisagés pour maintenir les chariots durant leur manipulation.

Les moyens de transfert peuvent également par exemple comporter d'une part un moteur fixe par rapport au second compartiment et d'autre part un moteur fixe par rapport au plateau, chaque moteur entraînant une roue dentée en prise avec une crémaillère fixée sur le tiroir parallèlement à la direction de transfert. Il s'agit là d'un mode de réalisation préféré pour réaliser le transfert d'un tiroir vers un plateau correspondant.

Le tiroir dans cette forme de réalisation présente avantageusement une paroi latérale escamotable afin de faciliter l'entrée et la sortie de chariots dans le tiroir lorsque le tiroir est sensiblement au niveau du plancher.

Le premier compartiment et le second compartiment sont par exemple disposés dans un meuble qui peut être comparé à une étagère dans laquelle on vient ranger les chariots. Comme suggéré plus haut, ce meuble peut aussi contenir des équipements pour la préparation de repas.

En ce qui concerne le plateau, celui-ci est par exemple un plateau d'un monte-charge comportant une colonne verticale le long de laquelle se déplace le plateau à l'aide de moyens d'entraînement motorisés. Tout type d'entraînement peut être considéré ici : moteur électrique et courroies d'entraînement, vérins hydrauliques, mécanisme électro-hydraulique, ciseaux avec guidages, mécanisme magnétique, .... Tous ces moyens d'entraînement sont de préférence débrayables afin de pouvoir être opérés manuellement en cas de panne. Une forme de réalisation préférée prévoit que la colonne et les moyens d'entraînement motorisés sont logés dans une armoire, ne serait-ce que pour des raisons de sécurité. Toutefois, cette solution est aussi avantageuse car elle permet également de prévoir de disposer des tiroirs de rangement dans ladite armoire permettant ainsi une optimisation de l'espace.

La présente invention concerne également une cabine d'aéronef, caractérisée en ce qu'elle comporte un dispositif tel que décrit ci-dessus. Avantageusement, pour une meilleure optimisation de l'utilisation de la surface au niveau de la cabine, le dispositif sera disposé de telle sorte que son plateau se trouve au niveau d'un couloir de la cabine. L'espace utilisé pour la manipulation des chariots est alors un espace qui est utilisé par ailleurs pour le passage de passagers ou de membres de l'équipage (naviguant ou commercial).

Elle concerne aussi un fuselage d'aéronef comportant une porte au niveau de laquelle se trouve un couloir transversal, caractérisé en ce qu'il comporte en outre un dispositif pour le rangement optimisé de chariots tel que décrit ci-dessus. Il faut entendre ici par "une porte" un ensemble de deux portes se faisant face. Dans un tel fuselage d'aéronef, le plateau du dispositif pour le rangement optimisé de chariots se trouve avantageusement au niveau du couloir transversal. Ainsi l'espace dans lequel évolue le plateau lors de la manipulation de chariots peut également être utilisé comme passage d'accès à la porte correspondante. De la sorte, l'espace dans le fuselage est encore optimisé.

Des détails et avantages de la présente invention ressortiront mieux de la description qui suit, faite en référence aux dessins schématiques annexés sur lesquels :
La figure 1 est une vue en coupe transversale d'un fuselage d'aéronef équipé d'un dispositif selon la présente invention,
Les figures 2 et 3 sont des vues similaires à la figure 1 pour deux variantes de réalisation,
La figure 4 est une vue en perspective de l'ensemble d'un dispositif selon la présente invention,
La figure 5 est une vue en perspective à échelle agrandie montrant partiellement d'en haut le dispositif de la figure 4,
La figure 6 est une vue correspondant à la figure 4 du même dispositif montré dans une autre position,
La figure 7 est une vue similaire à la figure 5 montrant le même dispositif dans une autre position,
La figure 8 est une vue similaire aux figures 4 et 6 montrant le dispositif selon l'invention dans une troisième position,
La figure 9 est une vue similaire aux vues des figures 5 et 7 montrant le même dispositif dans cette troisième position,
La figure 10 est une vue en perspective d'un dispositif selon l'invention permettant de voir par transparence des détails mécaniques d'un dispositif selon l'invention,
La figure 11 est une vue de détail à échelle agrandie de la figure 10 dans une seconde position,
Les figures 12 et 13 correspondent, à une échelle réduite, à la vue de la figure 10 montrant le dispositif de cette figure dans deux autres positions,
Les figures 14 et 15 correspondent sensiblement à la vue de la figure 13 avec en outre un chariot supplémentaire,
Les figures 16 et 17 sont des vues de détails d'un mécanisme de monte-charge utilisé dans le dispositif montré sur les figures précédentes,
La figure 18 est une vue de détail à échelle agrandie montrant un détail D grandi de la figure 5,
Les figures 19 et 20 montrent en perspective un dispositif de rangement optimisé de chariots selon l'invention dans deux autres variantes de réalisation, et
La figure 21 est une vue en plan d'une cabine d'aéronef mettant en oeuvre un dispositif selon la présente invention.

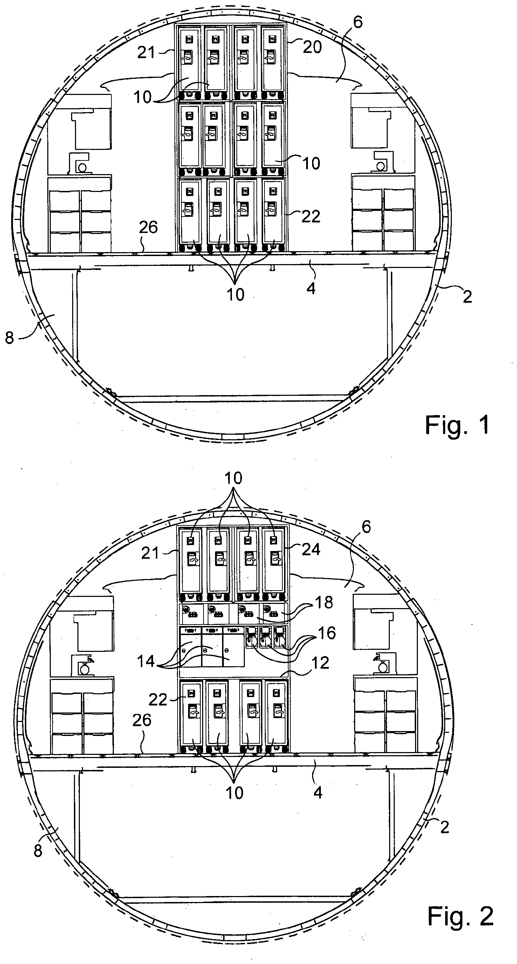

On reconnaît sur les figures 1 à 3 un fuselage 2 d'aéronef en coupe transversale. L'intérieur de ce fuselage est partagé en deux par un pont 4 au-dessus duquel se trouve une cabine 6 destinée à accueillir des passagers et en-dessous duquel se trouve une soute 8 permettant de loger par exemple des bagages des passagers voyageant dans la cabine 6 et/ou du fret.

On reconnaît également sur les figures 1 à 3 des chariots 10 en vue de face. Il s'agit ici de chariots classiques qui sont couramment utilisés à bord d'un aéronef pour le service de repas et de boissons aux passagers voyageant à bord de cet aéronef. L'invention ne se limite toutefois pas à ce type de chariots et concerne également par exemple des chariots utilisés pour le transport et/ou le rangement de tous types d'objets : vêtements, vêtements sur cintres, matériel de couchage, matériel technique, matériel médical, vaisselle, etc..

Ici, de manière originale, les chariots 10 sont rangés sur trois niveaux différents. Sur la figure 1, on aperçoit un logement de douze chariots 10. Ces chariots 10 sont disposés en trois rangées de quatre chariots 10 superposées.

Sur la figure 2, on reconnaît une première rangée de quatre chariots 10. Au-dessus de ces chariots 10 se trouve un plan de travail 12, au-dessus et à distance duquel se trouvent des équipements permettant de préparer des repas. On a représenté ici à titre d'exemple trois fours 14, trois machines à café 16, et au-dessus de ces équipements des tiroirs de rangement 18. Au-dessus de ces tiroirs, se trouve à nouveau une rangée de quatre chariots 10.

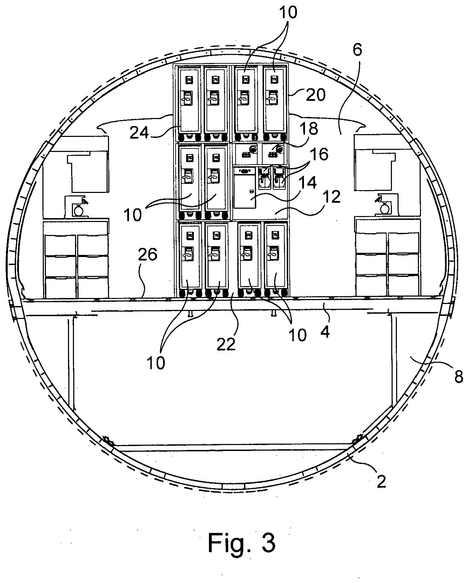

La forme de réalisation représentée sur la figure 3 est une forme de réalisation intermédiaire entre la forme de réalisation de la figure 2 et celle de la figure 1. Alors que sur la figure 1 on a un meuble 20 accueillant douze chariots 10, que sur la figure 2 un meuble 20 similaire (notamment de taille identique) loge huit chariots 10 et un équipement permettant de préparer des repas, on a sur la figure 3 un meuble 20 similaire aux meubles 20 des figures 1 et 2 logeant dix chariots 10 et des équipements pour la préparation de repas. On a dans cette troisième forme de réalisation une rangée inférieure de quatre chariots 10 et une rangée supérieure de quatre chariots 10. Au niveau intermédiaire entre ces deux rangées se trouvent deux chariots 10 alignés côte-à-côte à côté desquels se trouve un équipement pour la préparation de repas comportant un four 14, deux machines à café 16 et deux tiroirs de rangement 18. On trouve également ici un plan de travail 12 de taille réduite par rapport au plan de travail de la figure 2.

Les figures suivantes (4 à 18) illustrent comment ranger les chariots placés en hauteur et comment les descendre. On considérera dans la suite de la description un premier compartiment 22 recevant des chariots 10 et un second compartiment 24 disposé au-dessus du premier compartiment et recevant lui aussi des chariots 10.

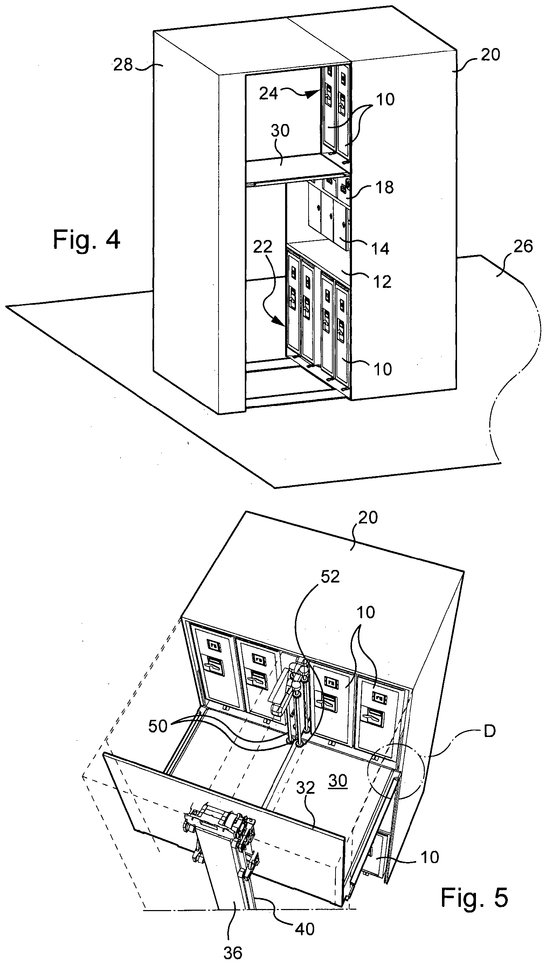

On supposera par la suite que le premier compartiment de chariots 22 est disposé à un niveau inférieur. Ce premier compartiment 22 correspond sensiblement à un compartiment de rangement de chariots 10 tel qu'on en trouve classiquement dans un aéronef. On a représenté par exemple schématiquement sur la figure 4 un plancher 26 que l'on supposera par la suite horizontal. Ce plancher correspond au plancher de la cabine 6. Ainsi, le premier compartiment 22 est de forme sensiblement parallélépipédique. Il présente une face inférieure horizontale qui se trouve dans le plan du plancher 26 (bien entendu, pour des raisons techniques, cette face inférieure peut être soit légèrement inclinée pour favoriser l'entrée des chariots 10 dans le compartiment ou présenter un léger décalage de l'ordre de quelques millimètres ou de l'ordre du centimètre avec le niveau du plancher 26). Le premier compartiment 22, de forme parallélépipédique, est fermé sur cinq faces. Sa face ouverte sera appelée par la suite face avant et elle s'étend verticalement. Généralement, la face avant d'un tel compartiment ne présente pas de porte mais des moyens de verrouillage sont prévus pour chaque chariot 10 afin de pouvoir les maintenir à l'intérieur de ce premier compartiment 22.

Le second compartiment 24 présente une forme globale similaire à celle du premier compartiment 22. On retrouve ainsi une forme parallélépipédique avec une face inférieure horizontale et une face avant verticale ouverte. Le second compartiment 24 est disposé au-dessus du premier compartiment 22. On suppose ici que le second compartiment 24 est le compartiment des figures 1 à 3 qui reçoit la rangée supérieure de quatre chariots 10. Ainsi, le second compartiment 24 est disposé au-dessus du premier compartiment 22 mais à distance de celui-ci. Dans le cas présent, et dans une forme de réalisation préférée, le second compartiment 24 est parfaitement aligné en hauteur par rapport au premier compartiment 22. On ne sortirait pas ici du cadre de l'invention en choisissant un second compartiment de dimensions différentes de celles du premier compartiment 22, ni en décalant le second compartiment 24 par rapport au premier compartiment 22, ni en plaçant le second compartiment 24 directement au-dessus du premier compartiment 22.

Un monte-charge 28 présentant un plateau 30 horizontal est disposé face au meuble 20 recevant les chariots 10 de manière superposée.

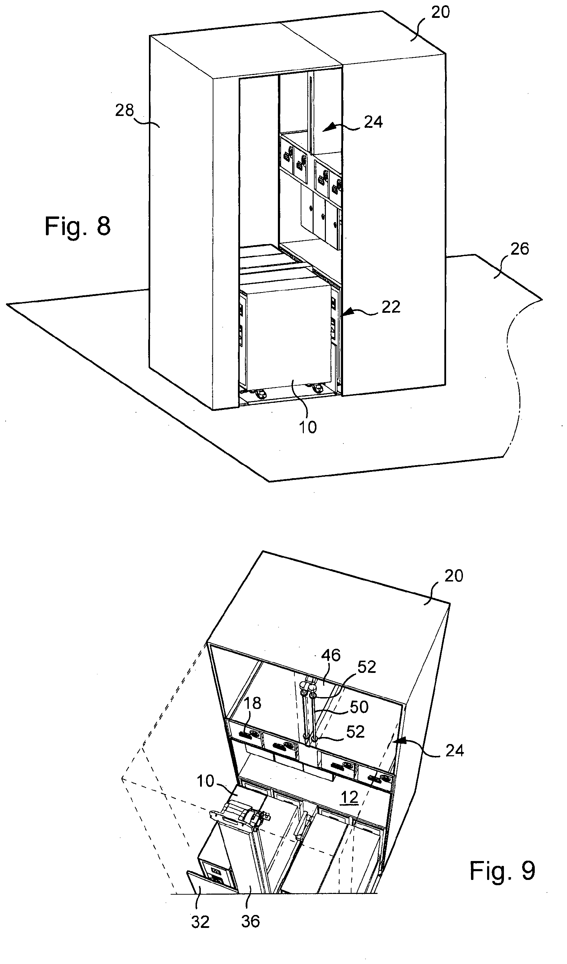

Le plateau 30 est essentiellement plan et présente de préférence une surface supérieure sensiblement plane, sans rebord vers le haut à sa périphérie. Il est mobile entre deux positions. La première position est illustrée par exemple sur les figures 4 à 7 tandis que la seconde position est illustrée par exemple sur les figures 8 et 9. Dans la première position, dite position supérieure, le plateau 30 se trouve sensiblement à la même altitude (et de préférence à la même altitude) que la face inférieure horizontale du second compartiment 24 et en vis-à-vis de celle-ci. Dans sa seconde position, dite position inférieure, le plateau 30 vient reposer sur le plancher 26 ou, de préférence, vient se loger dans un évidement de taille adaptée permettant alors à la face supérieure du plateau 30 d'affleurer avec le plancher 26 lorsque le plateau 30 est dans sa position extrême inférieure. De préférence, lorsque le plateau 30 est dans sa position inférieure, il ne gêne pas l'entrée et la sortie des chariots 10 se trouvant dans le premier compartiment 22. Le plateau 30, dans sa position inférieure, se trouve ainsi de préférence à la même altitude que la paroi inférieure du premier compartiment 22 de rangement de chariots et en vis-à-vis de celle-ci.

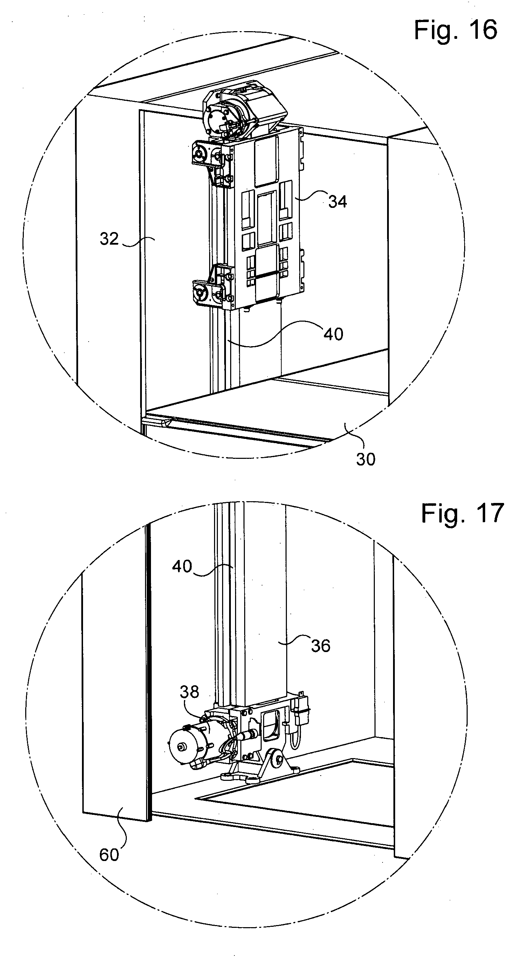

Un mécanisme motorisé non décrit dans le détail ici, permet le déplacement du plateau 30. On peut reprendre ici un mécanisme d'un monte-charge, par exemple un monte-charge utilisé dans un aéronef. Le mécanisme représenté sur les dessins est illustré plus en détails sur les figures 16 et 17. On voit par exemple sur ces figures que le plateau 30 est monté à angle droit par rapport à une plaque verticale 32. Cette dernière est fixée à un chariot 34 monté coulissant sur une colonne 36 et entraîné par un moteur 38 à l'aide de courroies 40. De préférence, ce mécanisme est débrayable, en cas par exemple de panne du moteur 38, et permet alors un actionnement manuel du plateau 30.

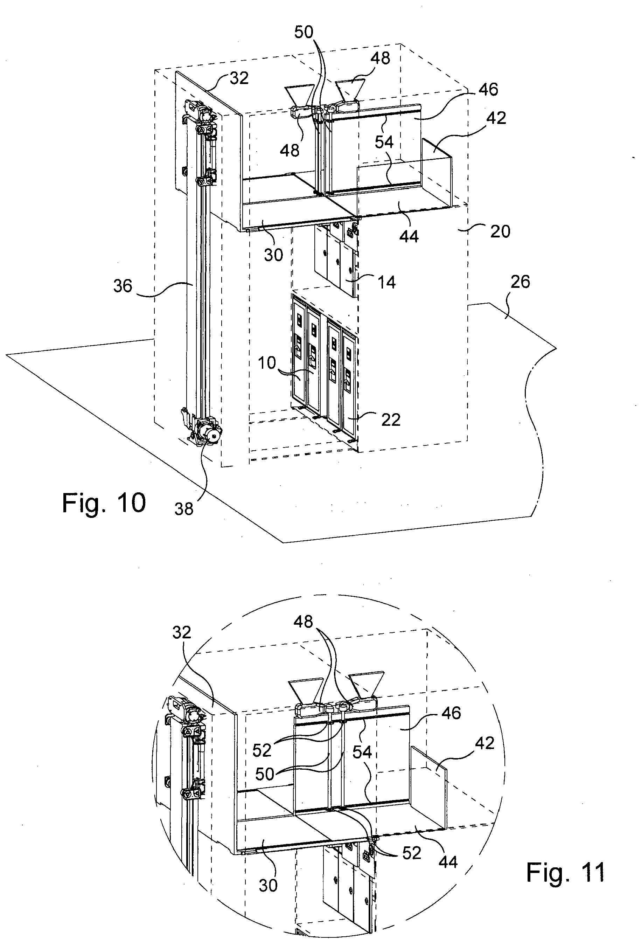

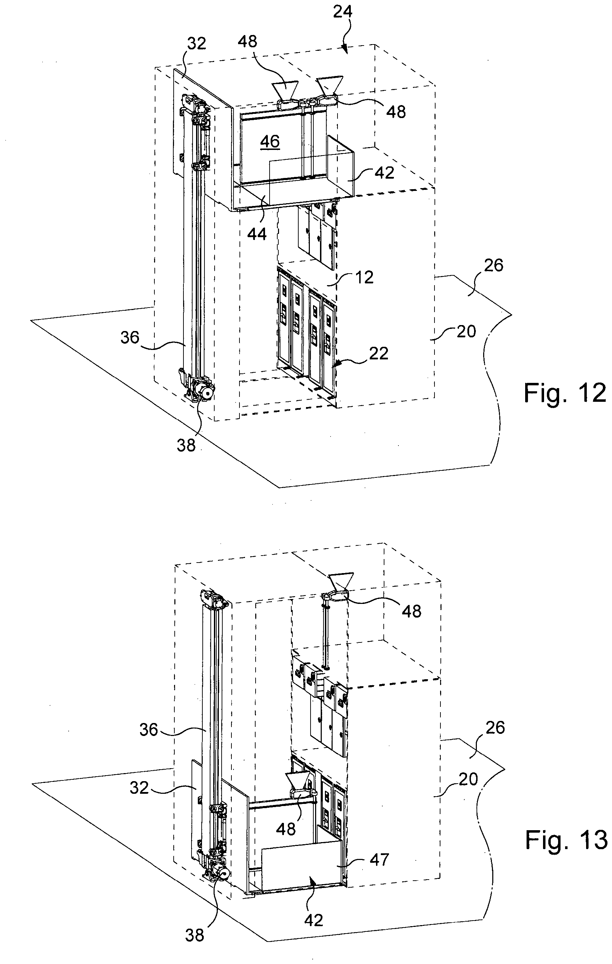

Des moyens de transfert sont prévus pour permettre le transfert des chariots 10 se trouvant dans le second compartiment 24 vers le plateau 30. Ces moyens de transfert comportent deux tiroirs 42. Chacun de ces tiroirs 42 reçoit deux chariots 10. On aperçoit bien un tiroir 42 par exemple sur les figures 10 à 13. Chaque tiroir 42 présente un fond 44 horizontal et trois parois latérales verticales. Une paroi latérale, appelée paroi latérale centrale 46, s'étend verticalement dans un plan perpendiculaire à la face avant du second compartiment 24 et se trouve sensiblement au centre du second compartiment 24. Lorsque chaque tiroir 42 reçoit un ensemble de deux chariots 10, les deux parois latérales centrales 46 correspondant aux deux tiroirs 42 se trouvent à chaque fois entre les deux ensembles de deux chariots 10. Dans la forme de réalisation représentée sur les dessins, il a été choisi d'utiliser deux moteurs électriques 48 pour entraîner chaque tiroir 42. Sur les figures, on voit deux groupes de moteurs, chacun des groupes représentés contenant deux moteurs électriques 48.

Pour chaque tiroir 42, un premier moteur électrique 48 est solidaire du meuble 20, ou plus généralement du second compartiment 24, tandis que le second moteur électrique 48 est solidaire du plateau 30. Chaque moteur électrique 48 entraîne, par l'intermédiaire d'un axe 50, deux roues dentées 52 montées chacune sur l'axe 50 à distance l'une de l'autre. Chacune de ces roues dentées 52 coopère avec une crémaillère 54 fixée horizontalement sur une paroi latérale centrale 46. L'axe 50 portant les deux roues dentées 52 s'étend quant à lui verticalement. Ainsi, quand deux roues dentées 52 d'un axe 50, en prise chacune avec une crémaillère 54, sont entraînées en rotation par un moteur électrique 48 correspondant, la paroi latérale centrale 46 correspondante est entraînée en translation selon une direction horizontale.

Les deux moteurs électriques 48 correspondant à une paroi latérale centrale 46 permettent de déplacer cette paroi d'une position dans laquelle elle est entièrement à l'intérieur du second compartiment 24 à une position dans laquelle elle se trouve sur le plateau 30 entièrement sortie de ce second compartiment 24. Durant la quasi-totalité de la course de la paroi latérale centrale 46, celle-ci est entraînée par les deux moteurs électriques 48 correspondants. En fin de course, selon que la paroi latérale centrale 46 se trouve sur le plateau 30 ou à l'intérieur du second compartiment 24, l'entraînement en translation se fait uniquement par l'un des deux moteurs électriques 48.

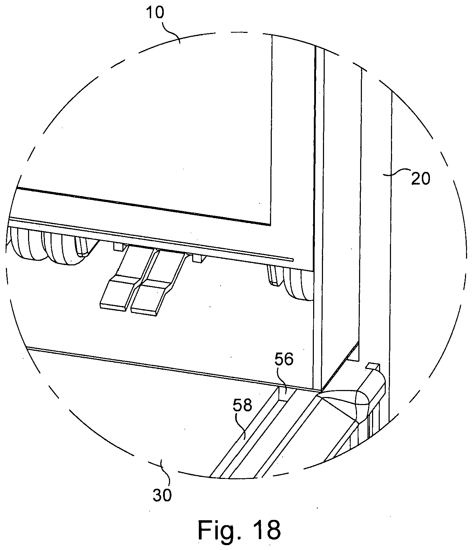

Dans les paragraphes qui suivent, on décrit comment des chariots 10 se trouvant dans le second compartiment 24 peuvent être descendus pour être amenés au niveau du plancher 26. On amène tout d'abord le plateau 30 au niveau de la face inférieure du second compartiment 24. La position du plateau 30 par rapport au second compartiment 24 peut être indexée ou être repérée à l'aide de capteurs (non représentés). Un tiroir 42 est alors entraîné en translation par les moteurs 48 correspondants pour déplacer ledit tiroir de sa position rangée à l'intérieur du second compartiment 24 à une position sortie sur le plateau 30. Il a été expliqué plus haut comment les moteurs électriques 48 agissent pour entraîner en mouvement le tiroir 42. La vue de détails de la figure 18 montre que pour réaliser un bon guidage du tiroir 42 durant ce mouvement de translation, le tiroir 42 présente sous son fond 44 un rail de guidage 56 venant coopérer avec une rainure 58 correspondante. Sur la figure 18, on a représenté la rainure 58 réalisée dans le plateau 30. Cette rainure 58 se prolonge également dans la face inférieure horizontale du second compartiment 24. Du côté de la paroi latérale centrale 46, on a un guidage qui est réalisé naturellement au niveau des crémaillères 54. Le rail de guidage 56 sera de préférence éloigné de la paroi latérale centrale 46. Un deuxième rail de guidage, à proximité de la paroi latérale centrale 46 peut éventuellement être également prévu.

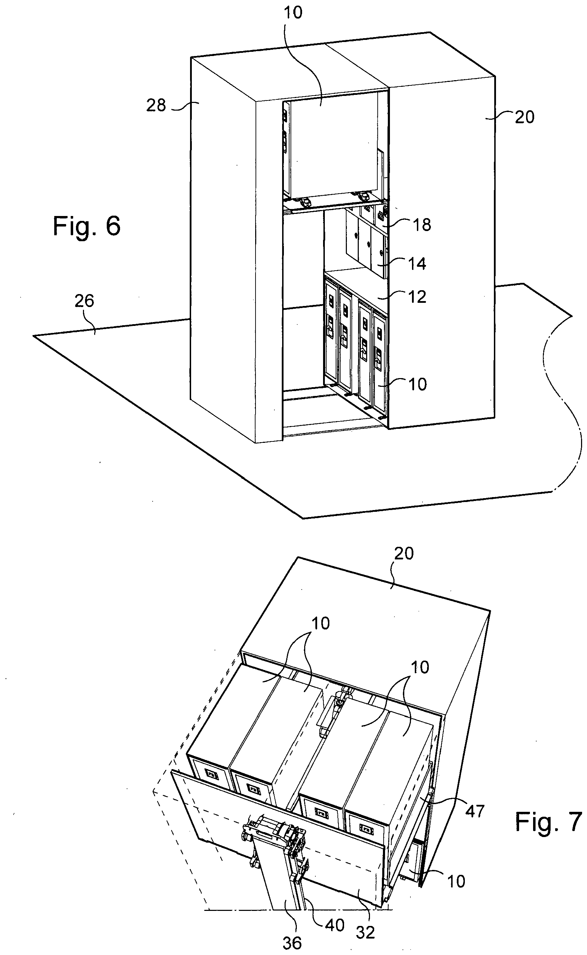

Lorsque le tiroir 42 est entièrement sur le plateau 30, c'est-à-dire lorsque la face latérale verticale parallèle à la face avant du second compartiment est sortie hors du compartiment 24, le plateau peut commencer son mouvement de descente. Cette position est montrée notamment sur les figures 6 et 7 (sur la figure 6, une paroi latérale du tiroir 42 a été omise pour mieux montrer l'un des deux chariots 10 transportés).

Le plateau 30 est ensuite descendu jusqu'à la position montrée sur les figures 8 et 9 (la figure 8 correspond ici à la figure 6, la même paroi latérale du tiroir 42 ayant été omise). Dans cette position inférieure, les chariots 10 se trouvant sur le plateau 30 se retrouvent sensiblement au même niveau que les chariots 10 représentés sur les dessins dans le premier compartiment 22. Le plateau 30 se trouve alors sensiblement au niveau du plancher 26 et donc de la paroi inférieure du premier compartiment 22. Il est aussi, comme cela ressort des figures, en vis-à-vis de ce premier compartiment 22.

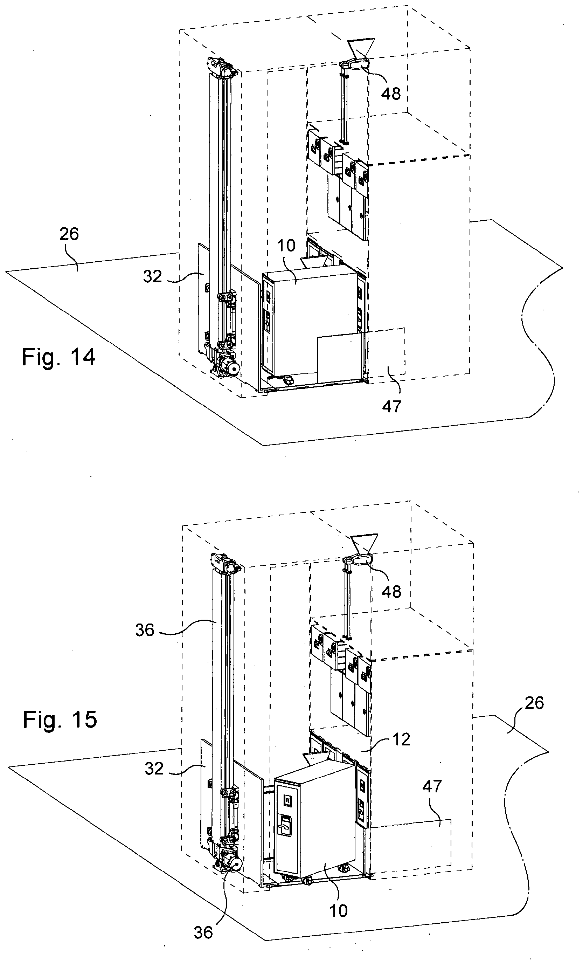

Pour faciliter le retrait d'un chariot 10 de son tiroir 42 dans la position abaissée de celui-ci, on prévoit de pouvoir escamoter la paroi latérale 47 verticale du tiroir 42 opposée à la paroi latérale centrale 46. Les figures 14 et 15 illustrent une paroi latérale 47 qui s'escamote en coulissant à l'horizontale parallèlement à la paroi latérale centrale 46. Tout autre moyen pour escamoter cette paroi latérale 47, lorsqu'elle existe, peut être envisagé. On pourrait ainsi, dans une variante de réalisation, faire pivoter cette paroi latérale 47 verticale autour de son arrête horizontale inférieure. Ainsi, si la face supérieure du fond 44 du tiroir 42 n'affleure pas avec le plancher 26, alors cette paroi latérale 47 dans sa position rabattue peut servir de plan incliné facilitant le chargement et le déchargement des chariots 10 du tiroir 42.

Il semble ici inutile de décrire comment un chariot 10 se trouvant au niveau du plancher 26 peut venir prendre place dans le second compartiment 24 disposé en hauteur. L'homme du métier, au vu de la description qui précède, comprendra rapidement qu'en opérant de manière inverse à la descente d'un chariot, on arrive à remonter ce chariot 10 jusqu'au second compartiment 24.

L'homme du métier comprendra également sans aucune difficulté comment le dispositif décrit peut permettre de monter et descendre des chariots se trouvant dans une position intermédiaire dans les cas d'un meuble 20 représenté par exemple sur les figures 1 et 3. La manoeuvre est alors identique sauf que la position du plateau 30 pour le transfert des tiroirs 42 est adaptée à la position du compartiment intermédiaire recevant des chariots 10.

La mécanique mise en oeuvre ici est très simple. En effet, le plateau 30 ne présente qu'un seul degré de liberté. Il se translate uniquement verticalement, c'est-à-dire perpendiculairement au plan du plateau. Il vient se positionner à la hauteur et en vis-à-vis à chaque fois de la paroi inférieure d'un compartiment de rangement de chariots. Lorsque le plateau 30 est en position basse, il peut servir lui-même de plancher. Il permet le passage devant les compartiments à chariots et peut faire partie d'un couloir de passage. Il forme également dans sa position inférieure une surface de travail notamment lorsqu'un plan de travail 12 est prévu dans le meuble 20 (figures 2 et 3 par exemple). La surface du plateau 30 est ainsi une surface utile et n'est donc pas une surface perdue.

La solution proposée ici prévoit donc un plateau qui monte et descend entre une position haute face à un compartiment et une position basse au niveau du sol ainsi que des moyens de transfert de chariots dans la position haute du plateau.

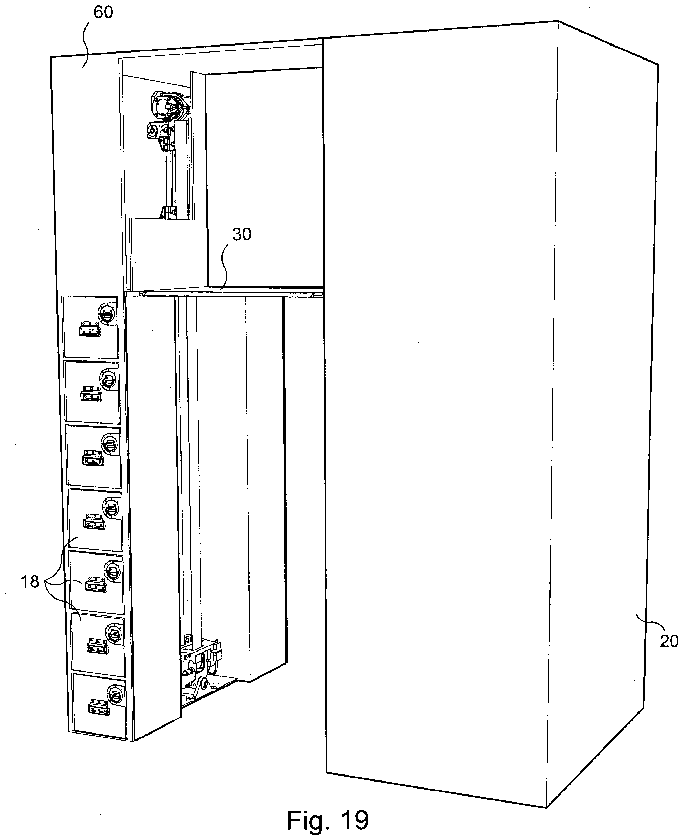

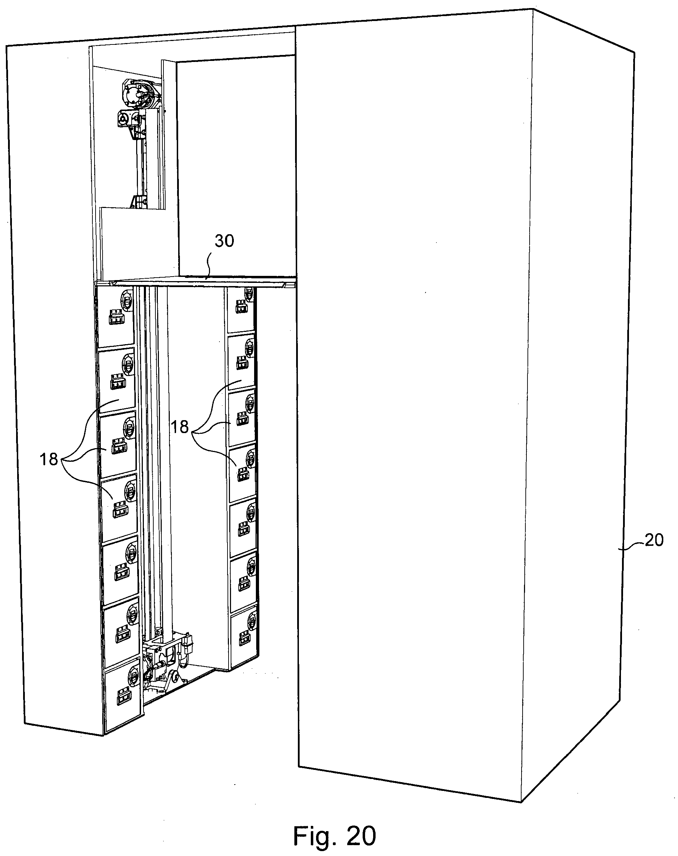

Les figures 19 et 20 montrent des variantes de réalisation permettant une encore meilleure optimisation de l'espace au niveau du dispositif du rangement optimisé selon l'invention. Comme on peut le voir sur les figures précédentes, le mécanisme comportant notamment le moteur 38 et la colonne 36 est logé à l'intérieur d'une armoire 60. Dans la forme de réalisation des figures 19 et 20, l'armoire 60 est aménagée pour pouvoir accueillir des tiroirs de rangement 18. Dans la forme de réalisation de la figure 19, les tiroirs de rangement 18 coulissent transversalement tandis que dans la forme de réalisation de la figure 20, ils coulissent longitudinalement. Dans les deux cas, on a prévu de chaque côté du mécanisme de commande du plateau 30 un ensemble de sept tiroirs de rangement 18. D'autres tiroirs auraient pu être prévus mais il aurait alors également fallu prévoir une échelle ou un escabeau pour y accéder.

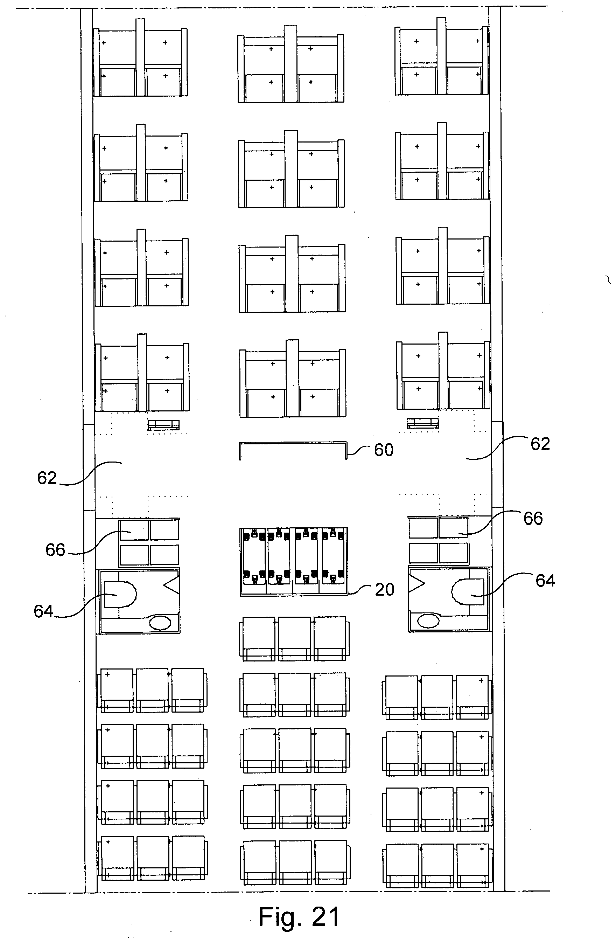

La figure 21 montre le positionnement d'un dispositif de rangement selon l'invention dans une cabine d'aéronef. La figure 21 présente un tronçon de cabine au niveau d'une porte. Dans un aéronef, on appelle généralement une porte un ensemble de deux portes disposées face à face à un même niveau du fuselage. On trouve ainsi au niveau d'une porte un couloir transversal 62. Un dispositif pour le rangement optimisé de chariots selon la présente invention est avantageusement disposé de telle sorte que l'espace dans lequel évolue le plateau 30 de ce dispositif fasse partie d'un couloir transversal 62 situé au niveau d'une porte de l'aéronef. Ceci permet une optimisation de cet espace. En effet, l'espace dans lequel se déplace le plateau 30 lors d'une opération de chargement/déchargement de chariots est tout d'abord utilisé pour la manipulation des chariots. Cet espace est aussi utile pour l'accès au premier compartiment 22. On a en effet besoin d'un espace de dégagement devant ce premier compartiment 22 afin de pouvoir faire rentrer et sortir des chariots 10 de ce premier compartiment 22. Ce même espace peut également être utilisé lors de la préparation des repas lorsque le dispositif pour le rangement optimisé de chariots selon la présente invention présente par exemple une configuration telle celle représentée sur la figure 2 ou sur la figure 3. Le personnel naviguant commercial a besoin d'un espace dans lequel il évolue pour préparer les repas. Cet espace peut aussi être utilisé à cette fin. Enfin, ce même espace peut être utilisé comme passage d'accès à la porte correspondante.

Dans la forme de réalisation représentée sur la figure 21, tous les chariots 10 sont rangés dans le dispositif pour le rangement optimisé de chariots selon l'invention représentée sur cette figure. On pourrait toutefois prévoir d'autres emplacements de rangement de chariots si nécessaire. On remarque par exemple la présence de toilettes 64. À côté de celles-ci, se trouve à chaque fois un espace cuisine 66. Celui-ci pourrait par exemple recevoir également des chariots 10.

On remarque sur la figure 21 que les chariots 10 rangés dans le meuble 20 sont alignés parallèlement à l'axe du couloir 62, qui passe entre le meuble 20 et l'armoire 60.

D'autres positionnements d'un dispositif pour le rangement de chariots selon la présente invention peuvent être envisagés. De préférence, le plateau du dispositif selon l'invention se trouve au niveau d'un couloir de la cabine de l'aéronef (ou plus généralement du véhicule considéré) et peut être utilisé comme passage. L'espace se trouvant entre le meuble recevant les chariots et l'armoire recevant le mécanisme du monte-charge peut aussi bien se trouver intégré à un couloir longitudinal qu'à un couloir transversal. Les chariots dans le premier compartiment et dans le second compartiment peuvent être aussi bien alignés transversalement (comme montré sur la figure 21) que longitudinalement (pivotés donc de 90° par rapport à la position montrée sur la figure 21). On peut également disposer un dispositif pour le rangement de chariots selon l'invention indépendamment d'une porte de l'aéronef.

Il apparaît clairement à l'homme du métier que l'invention décrite ci-dessus permet de limiter la surface nécessaire dans une cabine d'aéronef, ou de train (ou d'un autre véhicule pour le transport des passagers) consacrée au rangement de chariots utilisés pour les services aux passagers. Ce gain de place au niveau de la cabine se fait sans avoir à empiéter sur l'espace disponible dans la soute et sans avoir à modifier la structure de l'aéronef. L'invention se limite ainsi à un "simple" aménagement intérieur de la cabine n'impactant pas la structure du véhicule. La place ainsi gagnée, ou économisée, peut être mise à profit pour accueillir un plus grand nombre de passagers (ou pour augmenter le confort des passagers).

On remarque qu'un dispositif selon la présente invention est très modulable. En fonction de la hauteur disponible, on peut avoir deux ou trois rangées superposées de chariots. Chaque rangée de chariots peut recevoir deux, trois, quatre (ou plus) chariots.

Le monte-charge utilisé pour la manutention des chariots peut être également adapté. Dans l'exemple décrit ci-dessus, on pourrait par exemple avoir deux monte-charges avec chacun un plateau pouvant recevoir un tiroir et deux chariots. On peut également envisager d'avoir un monte-charge destiné à ne transporter qu'un seul chariot (ou deux chariots) qui puisse se déplacer face aux compartiments contenant les chariots afin de se positionner juste en face d'un chariot ou d'un ensemble de chariots contenu dans un tiroir.

La présente invention ne se limite pas aux formes de réalisation décrites ci-dessus à titre d'exemples non limitatifs et représentés sur les dessins. Elle concerne également toutes les variantes de réalisation à la portée de l'homme du métier dans le cadre des revendications ci-après.

Ainsi par exemple, la solution technique retenue par exemple pour le transfert des chariots vers le monte-charge pourrait être remplacée par d'autres moyens techniques. On pourrait par exemple prévoir un système de vérins remplaçant les moteurs électriques et la transmission par roues dentées décrite pour le déplacement des chariots entre le monte-charge et le compartiment servant à leur rangement. D'autres solutions techniques, ne mettant pas forcément en oeuvre un tiroir, pourraient être prévues. On pourrait par exemple prévoir au niveau du monte-charge un bras muni d'un crochet commandable à distance qui viendrait tirer ou pousser le chariot lors du transfert de celui-ci.

De même, pour le mécanisme du monte-charge, la forme de réalisation retenue sur les dessins reprend celle d'un monte-charge déjà utilisé dans un aéronef entre deux ponts. Toutefois, d'autres solutions peuvent être envisagées ici : élévateur électrique, hydraulique, électro-hydraulique, ciseaux avec guidages, mécanisme magnétique, .... On choisira ici de préférence une solution permettant de passer en mode d'actionnement manuel en cas de panne du moteur. Un mode d'actionnement entièrement manuel pourrait être aussi éventuellement envisagé.

## Revendications

1. Dispositif pour le rangement de chariots (10) dans un espace comprenant un plancher (26), ledit dispositif comportant :
- un premier compartiment (22) adapté à recevoir au moins un chariot (10)
- un second compartiment (24) disposé au-dessus du premier compartiment (22), le second compartiment (24) comportant une pluralité d'emplacements pour la réception d'autant de chariots (10) et présentant une ouverture de rangement permettant l'entrée et la sortie des chariots (10), les chariots (10) peuvent être rangés dans le second compartiment étant alignés selon une première direction dite transversale,
- un plateau (30) sensiblement parallèle au plancher et pouvant se déplacer selon une direction perpendiculaire audit plancher entre une position haute dans laquelle il se trouve sensiblement au niveau d'une paroi inférieure sensiblement horizontale du second compartiment (24), face à l'ouverture de rangement, et une position basse dans laquelle il se trouve sensiblement au niveau du plancher (26),
- des moyens de transfert pour le transfert d'au moins un chariot (10) disposé dans le second compartiment (24) du second compartiment (24) vers le plateau (30) et inversement, les moyens de transfert étant adaptés pour déplacer le(s) chariot(s) selon une direction de transfert à travers l'ouverture de rangement, où :
- la direction de transfert est une direction dite longitudinale perpendiculaire à la première direction,
- chaque emplacement du second compartiment (24) est adjacent à l'ouverture de rangement,
**caractérisé en ce que** :
- le plateau (30) s'étend sur toute la largeur de l'ouverture de rangement.

2. Dispositif selon la revendication 1, **caractérisé en ce que** le plateau (30) est dépourvu de rebord vers le haut à sa périphérie.

3. Dispositif selon l'une des revendications précédentes, **caractérisé en ce que**, en position basse, le plateau (30) vient se loger dans un évidement de taille adaptée pour que ledit plateau (30) présente une face supérieure affleurant avec le plancher (26).

4. Dispositif selon l'une des revendications précédentes, **caractérisé en ce que** les moyens de transfert comportent un tiroir (42) présentant une face inférieure horizontale (44) et au moins une paroi latérale verticale (46).

5. Dispositif selon la revendication 4, **caractérisé en ce que** les moyens de transfert comportent en outre d'une part un moteur (48) fixe par rapport au second compartiment (24) et d'autre part un moteur (48) fixe par rapport au plateau (30), **en ce que** chaque moteur (48) entraîne une roue dentée (52) en prise avec une crémaillère (54) fixée sur le tiroir (42) parallèlement à la direction de transfert.

6. Dispositif selon l'une des revendications 4 ou 5, **caractérisé en ce que** le tiroir (42) présente une paroi latérale (47) escamotable.

7. Dispositif selon l'une des revendications 1 à 6, **caractérisé en ce que** le premier compartiment (22) et le second compartiment (24) sont disposés dans un meuble (20).

8. Dispositif selon la revendication 7, **caractérisé en ce que** le meuble (20) contient également des équipements (14, 16, 18) pour la préparation de repas.

9. Dispositif selon l'une des revendications 1 à 8, **caractérisé en ce que** le plateau (30) est un plateau d'un monte-charge (28) comportant une colonne (36) verticale le long de laquelle se déplace le plateau (30) à l'aide de moyens d'entraînement motorisés (38, 40).

10. Dispositif selon la revendication 9, **caractérisé en ce que** la colonne (36) et les moyens d'entraînement motorisés (38, 40) sont logés dans une armoire (60).

11. Dispositif selon la revendication 10, **caractérisé en ce que** l'armoire (60) comporte en outre des tiroirs de rangement (18).

12. Cabine (6) d'aéronef, **caractérisée en ce qu'**elle comporte un dispositif pour le rangement de chariots selon l'une des revendications 1 à 11.

13. Cabine (6) d'aéronef selon la revendication 12, **caractérisé en ce que** le dispositif pour le rangement de chariots est disposé de telle sorte que son plateau (30) se trouve au niveau d'un couloir.

14. Fuselage (2) d'aéronef comportant une porte au niveau de laquelle se trouve un couloir transversal (62), **caractérisé en ce qu'**il comporte en outre un dispositif pour le rangement optimisé de chariots selon l'une des revendications 1 à 11, et **en ce que** le plateau (30) dudit dispositif pour le rangement optimisé de chariots se trouve au niveau du couloir transversal (62).

## Patentansprüche

1. Vorrichtung für die Unterbringung von Wagen (10) in einem Raum, der einen Boden (26) umfasst, wobei die Vorrichtung Folgendes umfasst:
- ein zur Aufnahme mindestens eines Wagens (10) ausgeführtes erstes Abteil (22),
- ein über dem ersten Abteil (22) angeordnetes zweites Abteil (24), wobei das zweite Abteil (24) eine Vielzahl von Stellplätzen zur Aufnahme von entsprechenden Wagen (10) aufweist und eine Unterbringungsöffnung aufweist, die den Eintritt und den Austritt der Wagen (10) gestattet, wobei die Wagen (10) in dem zweiten Abteil untergebracht werden können und in einer ersten Richtung, der Querrichtung, ausgerichtet sind,
- eine Plattform (30), die zum Boden im Wesentlichen parallel verläuft und sich bezüglich des Bodens in einer senkrechten Richtung zwischen einer hohen Position, in der sie sich im Wesentlichen auf der Höhe einer im Wesentlichen horizontal zum zweiten Abteil (24) verlaufenden unteren Wand gegenüber der Unterbringungsöffnung befindet, und einer niederen Position, in der sie sich im Wesentlichen auf der Höhe des Bodens (26) befindet, verschieben kann,
- Transfermittel für den Transfer mindestens eines im zweiten Abteil (24) angeordneten Wagens (10) aus dem zweiten Abteil (24) zur Plattform (30) und umgekehrt, wobei die Transfermittel zum Verschieben des/der Wagen/s in einer Transferrichtung durch die Unterbringungsöffnung ausgeführt sind, wo:
- die Transferrichtung eine senkrecht zur ersten Richtung verlaufende Längsrichtung ist,
- jeder Stellplatz des zweiten Abteils (24) der Unterbringungsöffnung benachbart ist,
**dadurch gekennzeichnet, dass**
- sich die Plattform (30) über die gesamte Breite der Unterbringungsöffnung erstreckt.

2. Vorrichtung nach Anspruch 1, **dadurch gekennzeichnet, dass** die Plattform (30) an ihrem Umfang keinen Rand nach oben hat.

3. Vorrichtung nach einem der vorhergehenden Ansprüche, **dadurch gekennzeichnet, dass** die Plattform (30) in der niederen Position in einer Aussparung aufgenommen wird, deren Größe so ausgeführt ist, dass die Plattform (30) eine obere Fläche aufweist, die mit dem Boden (26) bündig ist.

4. Vorrichtung nach einem der vorhergehenden Ansprüche, **dadurch gekennzeichnet, dass** die Transfermittel ein Schubfach (42) aufweisen, das eine horizontale untere Fläche (44) und mindestens eine vertikale Seitenwand (46) aufweist.

5. Vorrichtung nach Anspruch 4, **dadurch gekennzeichnet, dass** die Transfermittel ferner einerseits einen Motor (48), der bezüglich des zweiten Abteils (24) feststehend ist, und andererseits einen Motor (48), der bezüglich der Plattform (30) feststehend ist, aufweisen, und dass jeder Motor (48) ein mit einer am Schubfach (42) befestigten Zahnstange (54) in Eingriff stehendes Zahnrad (52) parallel zur Transferrichtung antreibt.

6. Vorrichtung nach einem der Ansprüche 4 oder 5, **dadurch gekennzeichnet, dass** das Schubfach (42) eine einklappbare Seitenwand (47) aufweist.

7. Vorrichtung nach einem der Ansprüche 1 bis 6, **dadurch gekennzeichnet, dass** das erste Abteil (22) und das zweite Abteil (24) in einer Einheit (20) angeordnet sind.

8. Vorrichtung nach Anspruch 7, **dadurch gekennzeichnet, dass** die Einheit (20) auch Ausrüstungen (14, 16, 18) zur Zubereitung von Mahlzeiten enthält.

9. Vorrichtung nach einem der Ansprüche 1 bis 8, **dadurch gekennzeichnet, dass** die Plattform (30) eine Plattform eines Lastenaufzugs (28) ist, der eine vertikale Säule (36) aufweist, entlang derer sich die Plattform (30) mit Hilfe von motorisierten Antriebsmitteln (38, 40) verschiebt.

10. Vorrichtung nach Anspruch 9, **dadurch gekennzeichnet, dass** die Säule (36) und die motorisierten Antriebsmittel (38, 40) in einem Schrank (60) aufgenommen sind.

11. Vorrichtung nach Anspruch 10, **dadurch gekennzeichnet, dass** der Schrank (60) ferner Unterbringungsschubfächer (18) aufweist.

12. Luftfahrzeugkabine (6), **dadurch gekennzeichnet, dass** sie eine Vorrichtung für die Unterbringung von Wagen nach einem der Ansprüche 1 bis 11 aufweist.

13. Luftfahrzeugkabine (6) nach Anspruch 12, **dadurch gekennzeichnet, dass** die Vorrichtung für die Unterbringung von Wagen so angeordnet ist, dass sich ihre Plattform (30) auf der Höhe eines Gangs befindet.

14. Luftfahrzeugrumpf (2), der eine Tür aufweist, auf deren Höhe sich ein Quergang (62) befindet, **dadurch gekennzeichnet, dass** er ferner eine Vorrichtung für die verbesserte Unterbringung von Wagen nach einem der Ansprüche 1 bis 11 aufweist und dass sich die Plattform (30) der Vorrichtung für die verbesserte Unterbringung von Wagen auf der Höhe des Quergangs (62) befindet.

## Claims

1. Device for the stowage of carts (10) in a space comprising a floor (26), the said device comprising:
- a first compartment (22) adapted for receiving at least one cart (10)
- a second compartment (24) arranged above the first compartment (22), the second compartment (24) comprising a plurality of locations for receiving that same number of carts (10) and having a stowage opening allowing entry and exit of the carts (10), the carts (10) be able to be stowed in the second compartment and being aligned in a first direction said to be transverse,
- a platform (30) more or less parallel to the floor and able to move along a direction perpendicular to the said floor between a high position in which it is more or less at the level of a more or less horizontal lower wall of the second compartment (24), facing the stowage opening, and a low position in which it is more or less at the level of the floor (26),
- transfer means for the transfer of at least one cart (10) arranged in the second compartment (24) from the second compartment (24) to the platform (30) and vice versa, the transfer means being adapted to move the cart(s) in a transfer direction through the stowage opening,
in which:
- the transfer direction is a direction said to be longitudinal, perpendicular to the first direction,
- each location of the second compartment (24) is adjacent to the stowage opening,
**characterised in that**:
- the platform (30) extends across the entire width of the stowage opening.

2. Device according to claim 1, **characterised in that** the platform (30) has no upward lip at its periphery.

3. Device according to one of the preceding claims, **characterised in that**, in the low position, the platform (30) is housed in a recess of a size designed such ensuring that the said platform (30) has an upper face flush with the floor (26).

4. Device according to one of the preceding claims, **characterised in that** the transfer means comprise a drawer (42) having a horizontal lower face (44) and at least one vertical side wall (46).

5. Device according to claim 4, **characterised in that** the transfer means further comprise on the one hand a motor (48) fixed in relation to the second compartment (24) and on the other hand a motor (48) fixed in relation to the platform (30), **in that** each motor (48) drives a cogwheel (52) meshing with a rack (54) fastened onto the drawer (42) parallel to the direction of transfer.

6. Device according to either of claims 4 and 5, **characterised in that** the drawer (42) has a retractable side wall (47).

7. Device according to one of claims 1 to 6, **characterised in that** the first compartment (22) and the second compartment (24) are arranged in a unit (20) .

8. Device according to claim 7, **characterised in that** the unit (20) also contains equipment items (14, 16, 18) for the preparation of meals.

9. Device according to one of claims 1 to 8, **characterised in that** the platform (30) is a platform of a cargo hoist (28) comprising a vertical column (36) along which the platform (30) moves with the aid of motorised drive means (38, 40).

10. Device according to claim 9, **characterised in that** the column (36) and the motorised drive means (38, 40) are accommodated in a cabinet (60).

11. Device according to claim 10, **characterised in that** the cabinet (60) further comprises stowage drawers (18).

12. Aircraft cabin (6), **characterised in that** it comprises a device for the stowage of carts according to one of claims 1 to 11.

13. Aircraft cabin (6) according to claim 12, **characterised in that** the device for the stowage of carts is arranged such that its platform (30) is at the level of an aisle.

14. Aircraft fuselage (2) comprising a door at which there is a transverse aisle (62), **characterised in that** it further comprises a device for the optimised stowage of carts according to one of claims 1 to 11, and **in that** the platform (30) of the said device for the optimised stowage of carts is at the level of the transverse aisle (62).
